# EUROPEAN PATENT SPECIFICATION

(11) **EP 1 379 377 B1**
(45) Date of publication and mention of the grant of the patent: **02.02.2011**
(21) Application number: 01966920.9
(22) Date of filing: 11.09.2001
(51) Int. Cl.: B29D 1/00

(54) **MOLDING APPARATUS WITH RECIPROCATING MOLD TUNNEL CAPABLE OF FORMING DIFFERENT PRODUCTS SHAPES**
GIESSVORRICHTUNG MIT EINEM HIN- UND HERBEWEGENDEN FORMTUNNEL MIT DER FÄHIGKEIT, VERSCHIEDENE PRODUKTFORMEN ZU BILDEN
APPAREIL DE MOULAGE DOTE D'UN TUNNEL DE MOULAGE A MOUVEMENT ALTERNATIF ET CAPABLE DE PRODUIRE DIFFERENTES FORMES D'ARTICLES

(30) Priority: 11.09.2000 US 659533
(43) Date of publication of application: 14.01.2004
(73) Proprietor: Lupke, Manfred Arno Alfred, Thornhill Ontario L3T 1W6 (CA); Lupke, Stefan, A., Thornhill, Ontario L3T 1X6 (CA)
(72) Inventor: Lupke, Manfred Arno Alfred, Thornhill Ontario L3T 1W6 (CA); Lupke, Stefan, A., Thornhill, Ontario L3T 1X6 (CA)
(74) Representative: Otten, Hajo
(86) International application number: PCT/CA2001/001266
(87) International publication number: WO 2002/020235

(56) References cited:
- WO-A-95/01251
- US-A- 3 844 700
- US-A- 4 003 685
- US-A- 5 320 797
- US-A- 5 744 091

## Description

### FIELD OF THE INVENTION

The present invention relates to a molding apparatus having a moving mold tunnel formed of a plurality of reciprocating mold blocks which constantly remain along the molding path of the apparatus.

### BACKGROUND OF THE INVENTION

A number of years ago, Coma Inc. of Toronto, Ontario, Canada, developed and patented a plastic pipe molding apparatus having a moving mold tunnel formed by reciprocating mold blocks. This apparatus is well described in United States Patent 5,744,091.

The above patented apparatus is specifically designed to form a continuous length of pipe having uniform cross section along the length of the pipe. In order to vary the cross section of the pipe, e.g. to add a coupler or the like further pipe handling apparatus are required.

US 5,744,091 discloses in particular a molding apparatus comprising a moving mold tunnel formed by an upstream and at least one downstream mold block both of which move back and forth along a mold path and an extruder die with at least one plastic flow channel having a channel mouth which feeds plastic to the mold tunnel.

US 3,844,700 discloses a method and apparatus for forming continuous thermoplastic pipe having corrugated segments, reciprocably movable carriage in order to position a mold that creates corrugations. The apparatus has spaced corrugated flexible wall portions along the length of the pipe. The pipe is extruded through a conventional extrusion die to produce pipe of the desired diameter and wall thickness. A portion of the continuously advanced pipe is heated to a desired elasticity and corrugated by engagement with said corrugating mold means. The heating means and corrugating means are coordinated to move with the continuously extruded pipe.

WO 95/01251 discloses a method and apparatus for forming a double-walled thermoplastic tube with integral belts, which bases on the concept of circulating molds. The disclosed travelling mold tunnel for forming double walled corrugated tubes has a first portion for forming the corrugated tube and a second belt portion for forming a cuff portion suitable for coupling with another tube. At the upstream end of the belled portion, radial small diameter passages are provided so that a pressure differential may be set up between the inside and the outside of a first parison within the belt portion. Thus, vacuum may be applied through the radial passages to allow an inner parison to laminate with the first parison over its inner surface in the belled portion. The first parison is drawn into the passages in protruding balloons. These may be ruptured. Alternatively, positive pressure may be used.

US 5,320,797 discloses a method and an apparatus for the continuous manufacture of a compound pipe with a pipe socket, which bases on the concept of circulating molds. For the continuous manufacture of a compound pipe with a pipe socket including a smooth internal tube and an external tube provided with transverse grooves and welded together with the latter, an external tube and an internal tube are extruded, the latter into the external tube. While the normal compound pipe is manufactured, gas is blown at a slight overpressure into the space between the external tube and the internal tube. When the pipe socket is produced, this space is vented so that a full-surface bearing of the internal tube against the external tube is achieved, to which end the internal tube is acted upon from its inside by gas under pressure.

US 4,003,685 is directed at an apparatus for molding plastic pipe with enlarged portions formed therein, which is based on the concept of circulating molds. A tube of hot plastic material is continuously extruded into a blow Molding zone formed by a series of cooperating pairs of forwardly moving die blocks. An internal fluid pressure is applied within the hot plastic tube during forward movement of the same through the blow molding zone to expand the tube and mold the same against the body-forming and enlarged sleeve-forming mold cavities. To avoid blowing holes in the hot plastic tube as the tube is expanded and stretched, the internal fluid pressure in the hot plastic tube is periodically lowered as the hot plastic lube is received within the enlarged sleeve-forming mold cavity.

### SUMMARY OF THE PRESENT INVENTION

The present invention relates to a molding apparatus of the type having a moving mold tunnel formed by reciprocating mold blocks for forming product having regions of varying shapes lengthwise along the product.

More specifically, the molding apparatus of the present invention comprises a moving mold tunnel formed by an upstream and at least one downstream mold block, both of which move back and forth along a mold path. The apparatus further includes an extruder die with at least one plastic flow channel having a channel mouth which feeds plastic to the mold tunnel. The upstream mold block has first and second product shaping regions with the first product shaping region being positioned to receive the plastic from the mouth of the plastic flow channel and the second product shaping region remaining upstream away from the mouth of the plastic flow channel in a first molding stage of the apparatus. In a second molding stage of the apparatus, both the first and second product shaping regions of the upstream mold block are positioned to receive the plastic from the mouth of the plastic flow channel.

The at least one downstream mold block has product shaping regions to accept the product shaped in both the first and second product shaping regions of the upstream mold block.

In accordance with the molding apparatus of the present invention, product e.g. plastic pipe or the like can be formed with extended continuous lengths of the product having a uniform cross section by using only the first product shaping region of the upstream mold block and the at least one downstream mold block. If it is desired to vary the cross sectional shape of the product, the second product shaping region of the upstream mold block is then brought into use in cooperation with both the first product shaping region of the upstream mold block and the at least one downstream mold block.

### BRIEF DESCRIPTION OF THE DRAWINGS

The above as well as other advantages and features of the present invention will be described in greater detail according to the preferred embodiments of the present invention in which;
Figure 1 is a perspective view of a pipe section cut from a length of pipe made in a molding apparatus according to a preferred embodiment of the present invention;
Figure 2 is a cross sectional view of the pipe section of Figure 1;
Figure 3 is a cross sectional view showing a continuous length of pipe from which pipe sections are cut according to a preferred embodiment of the present invention;
Figure 4 is a further sectional view showing a coupled joint made from the continuous length of pipe if Figure 3 ;
Figure 5 is a sectional view through a molding apparatus used to form the continuous length of pipe shown in Figure 3;
Figures 6 through 11 show different stages of operation of the pipe molding apparatus of Figure 5;
Figure 12 is a sectional view through the molding apparatus also showing product formed in the apparatus;

### DETAILED DESCRIPTION OF THE PREFERRED EMBODIMENTS

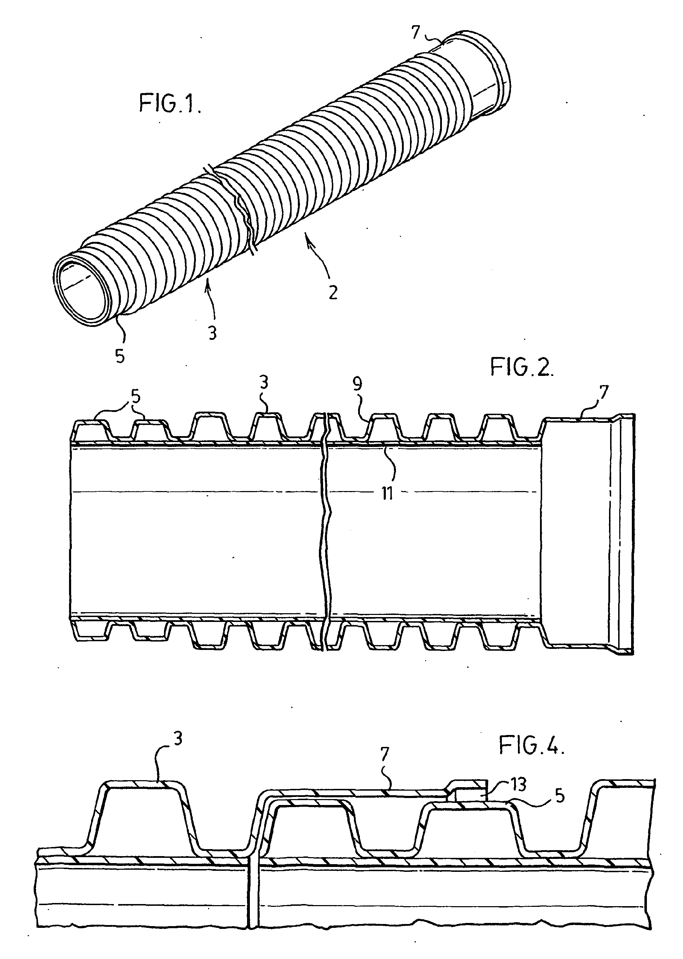

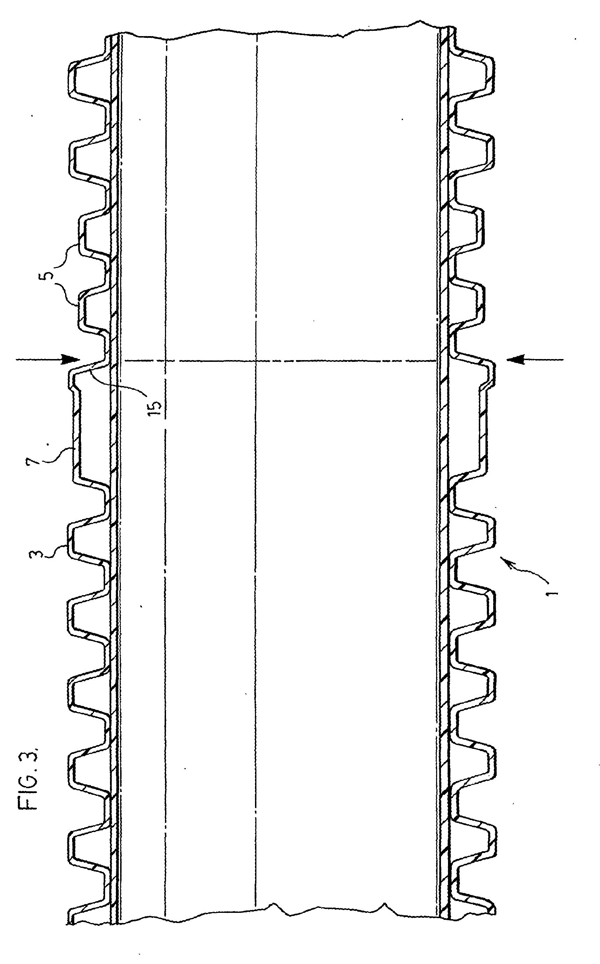

Figure 1 shows a pipe section generally indicated at 2. This pipe section is made from an extended length of pipe generally indicated at 1 in Figure 3 and to be described later in greater detail.

Returning to Figure 1, pipe section 2 includes a main body portion formed by corrugations 3 having smaller corrugations 5 at one end thereof and a larger belled or coupling member 7 at the other end of the pipe section.

Figure 2 shows that pipe section 1 has a double wall construction formed by an outer layer 9 from which all of the corrugations and the coupler are shaped and an inner wall 11 lying flat against the troughs of the corrugations in the outer wall.

Returning now to Figure 3, it will be seen how the pipe section 2 is formed as part of the pipe length 1. More particularly, this is a continuous length of pipe where, during its formation, the coupler 7 is in fact continuous with the corrugations 5 through pipe wall part 15. In forming pipe section 2 pipe wall 15 is cut away which then allows the coupler 7 at one end of one pipe section to telescopically engage the short corrugations 5 of a separate pipe section as shown in Figure 4 of the drawings. A sealing member 13 fits between the coupler 7 and one of the corrugations 5 to provide a liquid tight seal between the two pipe sections.

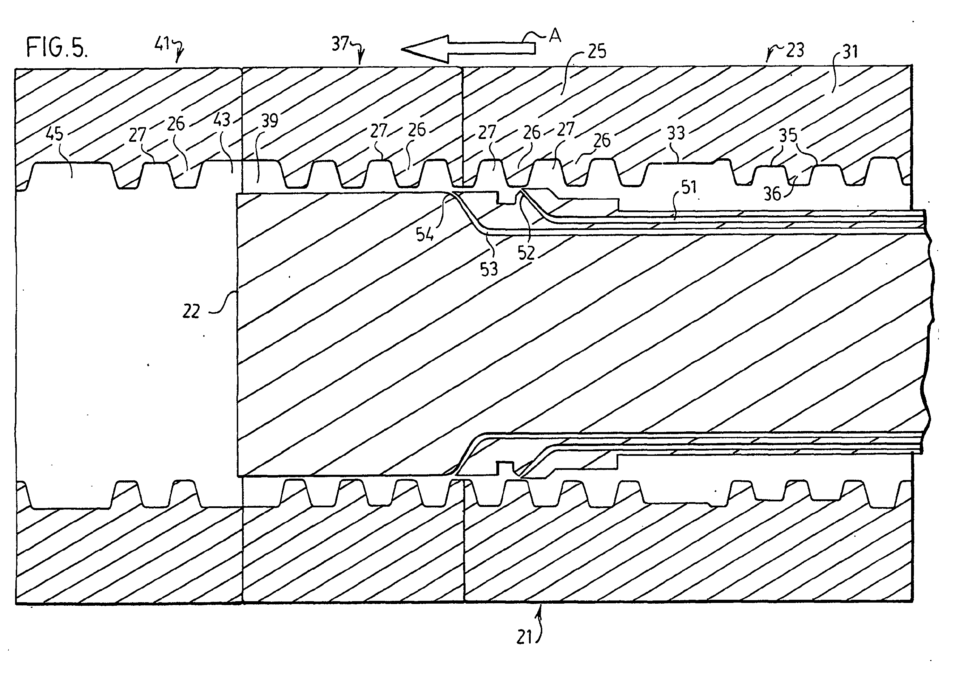

Figure 5 of the drawings shows the molding region generally indicated at 21 of an apparatus used to form the extended length of pipe 1 shown in Figure 3. This molding region receives plastic from an extruder which also forms part of the apparatus but which is not shown in Figure 5.

Molding region 21 comprises die equipment 22 feeding plastic from the extruder to a moving mold tunnel formed from mold block sections 23, 37 and 41. Mold block section 23 is located upstream relative to the two downstream mold blocks 37 and 41 in the direction of formation of pipe made in the molding apparatus.

The upstream mold block 23 has first and second product shaping regions 25 and 31 respectively. Product shaping region 25 comprises a plurality of tooth-like formations 26 separated by recesses 27. This same tooth and recess formation is repeated along much of mold block 37 and again in part of mold block 41. Teeth 26 and recesses 27 are used to form the relatively tall corrugations 3 in the outer wall of the pipe.

The second product shaping region of mold block 23 comprises an elongated recess 33 and further recesses 35 separated by tooth 36. Recess 33 is used to form the coupling bell in the outer pipe wall while tooth 36 in combination with recesses 35 is used to form the shorter corrugations 5 in the outer pipe wall.

Die equipment 22 comprises first and second plastic feed channels 51 and 53. Channel 51 terminates with a channel mouth 52 whereas, channel 53 terminates with a channel mouth 54.

The plastic, which is fed along the die equipment through channel 51 and out channel-mouth 52, forms the outer pipe wall, while the inner pipe wall is formed by plastic which flows along channel 53 and out channel mouth 54.

As is described in the earlier Corma patent, mold blocks 23, 37 and 41 move together with one another in the downstream direction indicated by arrow A when forming pipe. To release the pipe, the mold block sections open from the closed position of Figure 5 and travel separately from one another in the reverse or upstream direction. The mold blocks never move off of the molding path.

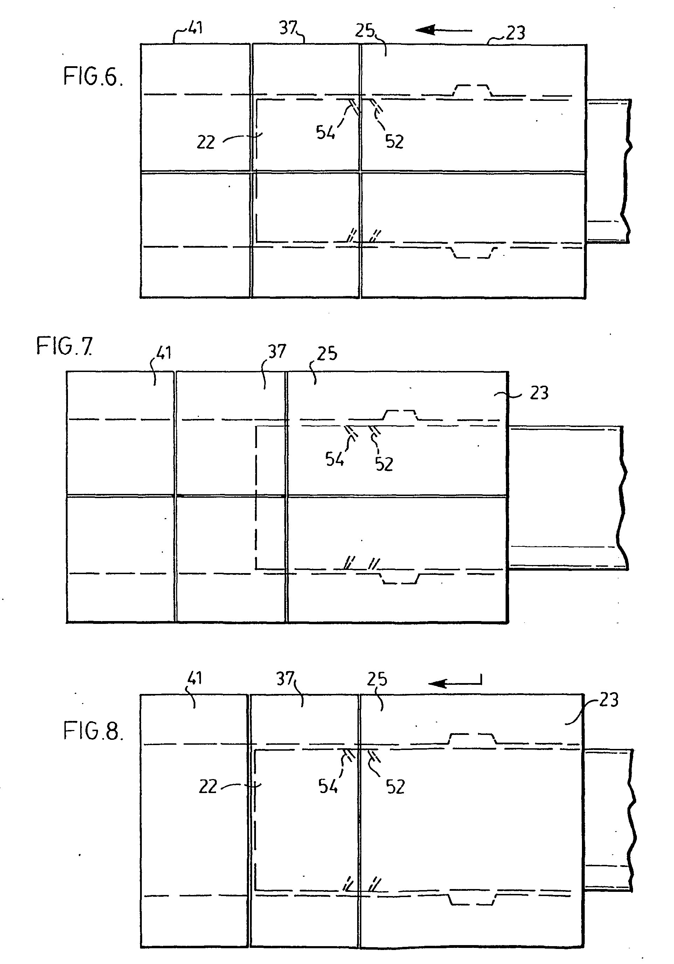

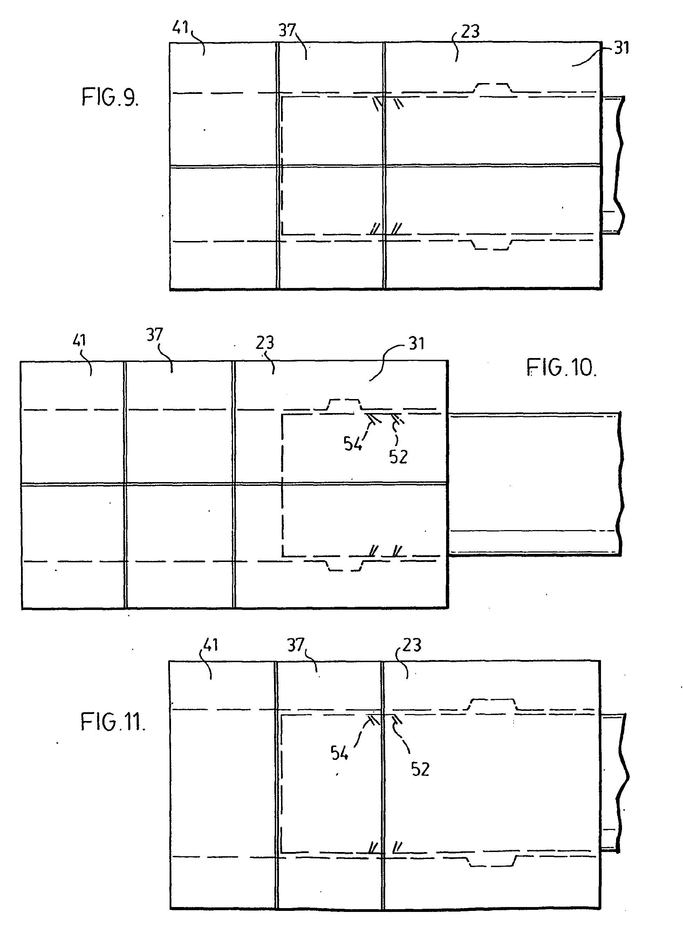

Molding region or tunnel 21 operates in a first and a second stage. The first stage of operation is described having reference to Figures 6 through 8 of the drawings. The second stage of operation is described having reference to Figures 9 through 11 of the drawings.

Referring specifically to Figures 6 through 8, the plastic fed from the die equipment and specifically from the mouth 52 of channel 51 feeds directly onto the profiled surfaces of each of the mold blocks. In the first stage of operation used to form strictly the taller corrugations 3 on the pipe, the mold block sections will move downstream relative to the die equipment only to the point that the teeth 26 and recesses 27 of the first product shaping region of the upstream mold block are exposed to channel mouth 52. In this first stage of operation, the second product shaping region of the upstream mold block always remains upstream of the plastic flow from the channel mouth. Figure 6 shows mold block 23, 37 and 41 moving downstream relative to die equipment 22 and Figure 7 shows the farthest downstream position reached by the mold blocks in the first molding stage. Once the mold blocks reach the Figure 7 position, they return to the Figure 8 position to continue for the molding of corrugations 3 and the flat inner pipe wall along the main length of the pipe. To the point thus far described, only the corrugated region of the pipe has been formed in the molding operation.

In the second stage of operation of the molding apparatus which only occurs intermittently during the formation of the pipe as shown in Figures 9 through 11 all three of the mold blocks will travel sufficiently far in the downstream direction such that the second product shaping region 31 of the upstream mold block 23 is exposed to the plastic flow emanating from mouth 52 of plastic flow channel 51. This is well shown in Figure 10 of the drawings. When the upstream mold block reaches the Figure 10 position, the bell coupling as well as the shorter corrugations 5 are formed in the length of pipe. From here on, the apparatus will return to the first stage of operation until it is once again time to form a further coupling region in the pipe.

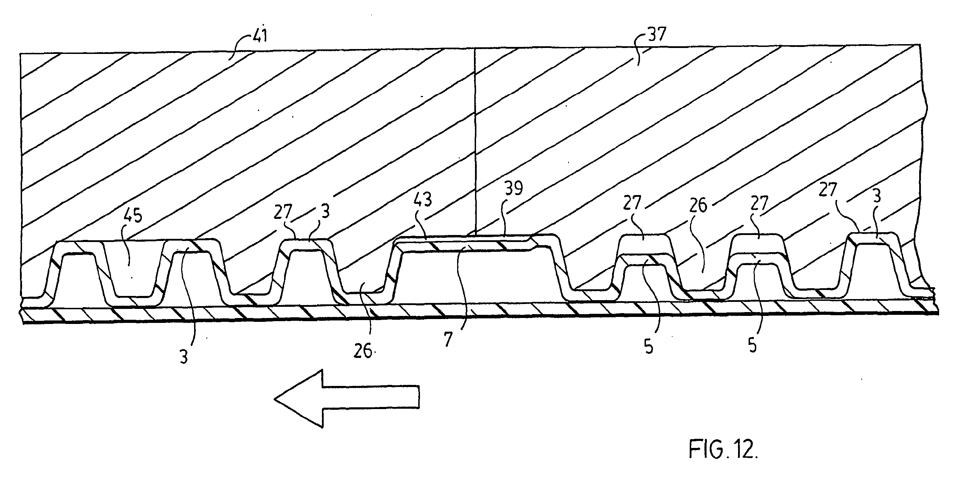

The two downstream mold blocks 37 and 41 are configured to accept either one of the pipe shapes formed in the upstream mold block. This is best described having reference to Figure 12 of the drawings.

More particularly, the first molding stage is used strictly to form the corrugations 3. These corrugations are initially shaped along the profiled surface defined by teeth 26 and recesses 27 in the first product shaping region of the upstream mold block. All of the mold blocks move downstream with one another with the plastic starting to set in the shaping region 25 of mold block 23.

Mold block 23 will then release the pipe and jump back to its starting position for the formation of further corrugations 3. This then allows the mold block 37 to open and jump upstream against the face of mold block 23. Mold block 37 will then close on the pipe. As soon as this happens, mold block 41 stops its downstream movement, opens to release the pipe and jumps back in the upstream direction against the face of mold block 37 to also close on the pipe. It is to be understood that corrugations 3 which have already been partially set in the pipe wall are accepted by the saw tooth profiles defined by teeth 26 and recesses 27 in each of the mold blocks 37 and 41. In addition, each of these mold blocks has one large cavity defined by recesses 39 and 43 in the two mold blocks. These recesses will again accept the shape of the corrugation. They do not have to define the actual shape of the corrugation because the corrugation shape has already been set at this point.

This same sequence of moving the mold blocks will continue during the corrugation forming stage of operation of the molding apparatus.

When it comes time to form the coupling part of the pipe, i.e. bell 7 and smaller corrugations 5, these, as earlier described, are shaped in recesses 33 and the saw tooth pattern defined by tooth 36 and recesses 35 in the second product shaping region of the upstream mold block. The upstream mold block will continue to move in a downstream direction with the other two mold blocks 37 and 41 to a point that the plastic has once again had an opportunity to set such that the plastic will at least hold its own shape. At this point, mold block 23 opens to release the pipe which continues to move downstream with the two mold blocks 37 and 41. Mold block 23 will then jump back up to a position to receive plastic in its first product shaping region to renew the formation of the larger corrugations 3 in the pipe wall. As soon as this happens, mold blocks 37 and 41 will again jump in sequence in the upstream direction and close on the shaped coupling region of the pipe wall. The actual bell portion of the coupling region will fit either the recess defined by recessed regions 39 and 43 cooperating with one another between mold blocks 37 and 41 or the larger recess 45 located strictly in mold block 41. The shorter corrugations 5 are easily accepted within any one of the recesses 27 and again because these shorter corrugations have already set sufficiently to hold their own shape they do not need to actually conform to the shape of these particular recesses.

Figure 12 of the drawings shows how the taller corrugations, the bell shaped coupler and the shorter corrugations fit within any of the recesses of the various different mold blocks.

It will now be understood from the description above how a reciprocating corrugator, i.e. a moving mold tunnel made from reciprocating mold blocks can, in one stage of operation, form continuous lengths of corrugated pipe and in a second stage of operation add different shapes such as for example a coupler directly to the body of the pipe.

Although various preferred embodiments of the present invention have been described in detail, it will be appreciated by those skilled in the art that variations may be made within the scope of the appended claims.

## Claims

1. Molding apparatus comprising a moving mold tunnel formed by an upstream and at least one downstream mold block (23, 37; 41) both of which move back and forth along a mold path, an extruder die (22) with at least one plastic flow channel (51; 53) having a channel mouth (52; 54) which feeds plastic to the mold tunnel, **characterized by** said upstream mold block (23) having first and second product shaping regions (25, 31), the first product shaping region (25) being positioned to receive the plastic from the mouth (52; 54) of the plastic flow channel (51; 53) with the second product shaping region (31) remaining upstream thereof in a first molding stage of said apparatus, and both said first and second product shaping regions (25, 31) of said upstream mold block (23) being positioned to receive the plastic in a second molding stage of the apparatus, said at least one downstream mold block (37; 41) having product shaping regions to accept the product shaped in both said first and second product shaping regions (25, 31) of said upstream mold block (23).

2. Molding apparatus according to claim 1, wherein said mold blocks (23, 37; 41) comprise pipe forming mold blocks and wherein said first product shaping region (25) of said upstream mold block (23) comprise a corrugated region and said second region (31) comprise a belled region.

3. Molding apparatus according to claim 1 including a plurality of said downstream mold blocks (37, 41).

4. Molding apparatus according to claim 2, wherein said extruder die (22) includes two plastic flow channels (51, 53) to form double wall pipe.

5. Molding apparatus according to claim 3, wherein said upstream mold block (23) is longer than any of said downstream mold blocks (37, 41).

## Patentansprüche

1. Formgebende Vorrichtung mit einem sich bewegenden Formtunnel, der von einem stromaufwärtigen und zumindest einem stromabwärtigen Formblock (23, 37; 41), von denen sich beide vorwärts und rückwärts entlang eines Formwegs bewegen, und einem Extruderkopf (22) mit zumindest einem Flusskanal (51; 53) für Plastik gebildet ist, der eine Kanalöffnung (52; 54) hat, die Plastik in den Formtunnel führt, **dadurch gekenntzeichnet, dass** der stromaufwärtige Formblock (23) erste und zweite Produktformbereiche (25, 31) aufweist, wobei der erste Produktformbereich (25) derart angeordnet ist, dass er Plastik von der Mündung (52; 54) des Flusskanals (51; 53) für Plastik aufnimmt, wobei der zweite Produktformbereich (31) während einer ersten Formstufe der Vorrichtung stromaufwärts davon verbleibt, und wobei der erste und der zweite Produktformbereich (25, 31) des stromaufwärtigen Formblocks (23) derart angeordnet sind, dass sie in einer zweiten Formstufe der Vorrichtung das Plastik erhalten, und wobei der zumindest eine stromabwärtige Formblock (37; 41) Produktformbereiche hat, um das Produkt auszunehmen, das in dem ersten und dem zweiten Produktformbereich (25, 31) des stromaufwärtigen Formblocks (23) geformt wurde.

2. Formgebende Vorrichtung nach Anspruch 1, wobei die Formblöcke (23, 37; 41) Formblöcke zum Formen von Rohren aufweisen und wobei der erste Produktformbereich (25) des stromaufwärtigen Formblocks (23) einen gewellten Bereich und der zweite Bereich (31) einen aufgeweiteten Bereich aufweist.

3. Formgebende Vorrichtung nach Anspruch 1 mit einer Vielzahl von stromabwärtigen Stromblöcken (37, 41).

4. Formgebende Vorrichtung nach Anspruch 2, wobei der Extruderkopf (22) zwei Flusskanäle (51, 53) für Plastik aufweist, um ein doppelwandiges Rohr zu formen.

5. Formgebende Vorrichtung nach Anspruch 3, wobei der stromaufwärtige Formblock (23) länger ist als jeder der stromabwärtigen Formblöcke (37, 41).

## Revendications

1. Appareil de moulage, comprenant un tunnel de moulage mobile qui est formé par un bloc de moulage situé en amont et au moins un bloc de moulage situé en aval (23, 37; 41) qui vont et viennent chacun le long d'un chemin de moulage, une filière d'extrusion (22) qui comprend au moins un canal d'écoulement de plastique (51; 53) présentant une ouverture de canal (52; 54) par l'intermédiaire de laquelle du plastique est amené au tunnel de moulage, **caractérisé en ce que** ledit bloc de moulage situé en amont (23) présente une première et une deuxième région de formage de produit (25, 31), la première région de formage de produit (25) étant positionnée de manière à recevoir le plastique en provenance de l'ouverture (52; 54) du canal d'écoulement de plastique (51; 53) avec la deuxième région de formage de produit (31) qui reste en amont de celle-ci dans un premier étage de moulage dudit appareil, et lesdites première et deuxième régions de formage de produit (25, 31) dudit bloc de moulage situé en amont (23) étant toutes les deux positionnées de manière à recevoir le plastique dans un deuxième étage de moulage de l'appareil, ledit au moins un bloc de moulage situé en aval (37; 41) présentant des régions de formage de produit pour accepter le produit formé à la fois dans lesdites première et deuxième régions de formage de produit (25, 31) dudit bloc de moulage situé en amont (23).

2. Appareil de moulage selon la revendication 1, dans lequel lesdits blocs de moulage (23, 37; 41) comprennent des blocs de moulage de formation de tuyau, et dans lequel ladite première région de formage de produit (25) dudit bloc de moulage situé en amont (23) comprend une région cannelée, et ladite deuxième région (31) comprend une région en cloche.

3. Appareil de moulage selon la revendication 1, comprenant une pluralité desdits blocs de moulage situés en aval (37, 41).

4. Appareil de moulage selon la revendication 2, dans lequel ladite filière d'extrusion (22) comprend deux canaux d'écoulement de plastique (51, 53) pour former un tuyau à double paroi.

5. Appareil de moulage selon la revendication 3, dans lequel ledit bloc de moulage situé en amont (23) est plus long que n'importe lequel desdits blocs de moulage situés en aval (37, 41).
